# EUROPEAN PATENT SPECIFICATION

(11) **EP 1 661 403 B1**
(45) Date of publication and mention of the grant of the patent: **14.05.2008**
(21) Application number: 04744819.6
(22) Date of filing: 23.08.2004
(51) Int. Cl.: H04N 7/24, H04N 7/16

(54) **REAL-TIME MEDIA DICTIONARY**
ECHTZEIT-MEDIA-WÖRTERBUCH
DICTIONNAIRE MEDIA EN TEMPS REEL

(30) Priority: 25.08.2003 US 497662 P
(43) Date of publication of application: 31.05.2006
(73) Proprietor: Koninklijke Philips Electronics N.V., 5621 BA Eindhoven (NL)
(72) Inventor: VRIJSEN, Alexander, P.P., NL-5621 BA Eindhoven (NL)
(74) Representative: Groenendaal, Antonius W. M.
(86) International application number: PCT/IB2004/051538
(87) International publication number: WO 2005/020579

(56) References cited:
- EP-A- 1 318 672
- WO-A-01/72040
- WO-A-02/11446
- US-A- 5 708 960
- US-A1- 2002 191 012
- BAGER J.: 'Übersetzung auf Rechtsklick' C'T, HEISE VERLAG vol. 1999, no. 24, 22 November 1999, HANNOVER, DE, page 72
- 'Klick-Polyglott' C'T, HEISE VERLAG vol. 2002, no. 10, 06 May 2002, HANNOVER, DE, page 67
- 'Mausklick statt Lexikon' C'T, HEISE VERLAG vol. 2003, no. 4, 10 March 2003, HANNOVER, DE, page 60

## Description

The present invention relates generally to multi-media streams (MMS), and more particularly, to a real-time media dictionary for use with multi-media streams.

People encounter words that they are not familiar with while viewing multi-media content (referred to herein as multi-media streams). Multi-media streams typically contain audio and video portions and may include subtitles and applications (OCAP, MHP, etc.). The multi-media streams can be any video content to be viewed, such as movies, television shows, educational material, work material and the like.

If a difficult word is encountered during viewing of multi-media content, the viewer can go to a dictionary or encyclopedia book to find the meaning or synonym of the word, or to a translation dictionary to look up the word in another language. If the device on which the multi-media stream is being viewed supports a dictionary (such as a computer), the viewer must stop the playing of the multi-media stream, open the dictionary application, and type in the word that he/she does not understand (if the spelling is known).

U.S. Patent No, 5,543,851 proposes to include a memory having a dictionary stored thereon that can look up words in text-based subtitles displayed with the playing of the multi-media stream. However, any words that are not understood by the viewer must be contained in the memory, therefore, unusual words, or specialized words used in certain professions of fields are not likely to be stored in the memory. Also, the system of U.S. Patent No, 5,543,851 is only useful for words that are displayed as part of the text-based subtitles. Thus, if subtitles are not used, or if image-based subtitles are used, the viewer must resort to the manual looking up of words as discussed above.

EP 1 318 672 A1 discloses a method for generating information about words used in a TV program, comprising the steps of: detecting automatically the words used in said TV program; storing automatically a pre-list of the detected words with their number of occurrences as goes the TV program; extracting automatically, from said pre-list, a list of relevant words in the TV program on the basis of their number of occurrences, said extraction being updated in real time; displaying the extracted list of relevant words on the TV screen; waiting for a selection of one of the extracted words by a user; searching automatically information about said selected words; and displaying this information on the screen.

US 5,708,960 discloses a system to dispatch a newspaper to subscriber households through satellite communication, a newspaper edit/dispatch system in the head office of a newspaper publishing company electronically creates each paper sheet of national news section as first newspaper data, and transmits the first newspaper data to the branch offices of the company through a communication satellite. In a newspaper edit/broadcast system installed in each of the branch offices, the received first newspaper data and second newspaper data of a local news section are combined and edited into third newspaper data, the third newspaper data are encrypted, and the sort of newspaper and the date of issue thereof are affixed to the encrypted newspaper data. Such newspaper data are broadcast through the communication satellite. In each home terminal installed in the individual subscriber households, the newspaper data broadcasted by the edit/broadcast system from the branch office are received, decrypted by the use of a key obtained beforehand, and the newspaper data having the sort of newspaper and the date of issue thereof which agree with preset subscription contents are temporarily stored. Thereafter, the stored newspaper data are read and displayed in compliance with a subscriber's request.

WO 01/72040 A2 discloses a media display system that enhances content by recognizing patterns in the media signal and modifying the media signal responsively to the recognized patterns. For example, in a television broadcast environment, the media signal could be a television program. At one instant, the television could include a logo of a car company. The system would recognize the logo and correlate it with enhanced content stored locally or by using additional input. Based on user preferences (e.g., whether the user is interested in that particular car company) and the correlated enhanced content, the system would modify the broadcast signal in appropriate way. For example, the enhanced content could be a commercial video clip or the phone number of a local car dealer. The modification to the broadcast signal could, in such a case, include overlaying the local car dealer's number on the video signal or buffering the broadcast signal and playing the commercial video clip to perform content enhancement.

Therefore it is an object of the present invention to provide a method and apparatus for viewing multi-media streams that overcome the disadvantages of the prior art.

Accordingly, a method for viewing a multi-media stream, the method comprising: recognizing words in the multi-media stream; indicating a desire to access a dictionary database during viewing of the multi-media stream; accessing the dictionary database upon the indicating; and displaying at least one of a definition, translation, and synonym of one or more selected words in the multi-media stream, characterized in that the selected words are chosen based on a predetermined number of words that were spoken or displayed prior to the indicating. The selected words can be chosen based on at least one of data in the multi-media stream, displayed subtitles in the multi-media stream, and reproduced audio in the multi-media stream. The dictionary database can be contained in the multi-media stream. The recognized words can be not text-based subtitles. The recognizing can comprise recognizing image-based subtitle words using image recognition. The recognizing can also comprise recognizing audio words using speech recognition. The method can further comprise choosing one of the definition, translation, and synonym for the at least one of the selected words and displaying the chosen definition, translation, or synonym. The indicating can comprises pressing a button dedicated to initiating the access to the dictionary database. The method can further comprise pausing the viewing of the multi-media stream while accessing the dictionary database.

Still provided is an apparatus for viewing a multi-media stream. The apparatus comprising: input means for inputting the multi-media stream; a display for viewing a video portion of the multi-media stream; a speaker for reproducing an audio portion of the multi-media stream; recognition means for recognizing words in the multi-media stream; means for indicating a desire to access a dictionary database during viewing of the multi-media stream; a controller for accessing the dictionary database upon the indicating, and displaying at least one of a definition, translation, and synonym of one or more selected words in the multi-media stream, characterized in that the controller is furthermore adapted for choosing selected words based on a predetermined number of words that were spoken or displayed prior to the indicating.

Also provided are a computer program product for carrying out the methods of the present invention and a program storage device for the storage of the computer program product therein. The computer program product can be embodied in a computer-readable medium or contained in the multi-media stream.

These and other features, aspects, and advantages of the apparatus and methods of the present invention will become better understood with regard to the following description, appended claims, and accompanying drawings where:
Figure 1 illustrates a schematic view of an embodiment of an apparatus for viewing multi-media streams.
Figures 2A and 2B illustrate the display of the apparatus of Figure 1 according to an embodiment for choosing a word for which additional information is desired.
Figures 3A to 3C illustrate the display of the apparatus of Figure 1 according to an embodiment for choosing a word for which additional information is desired.

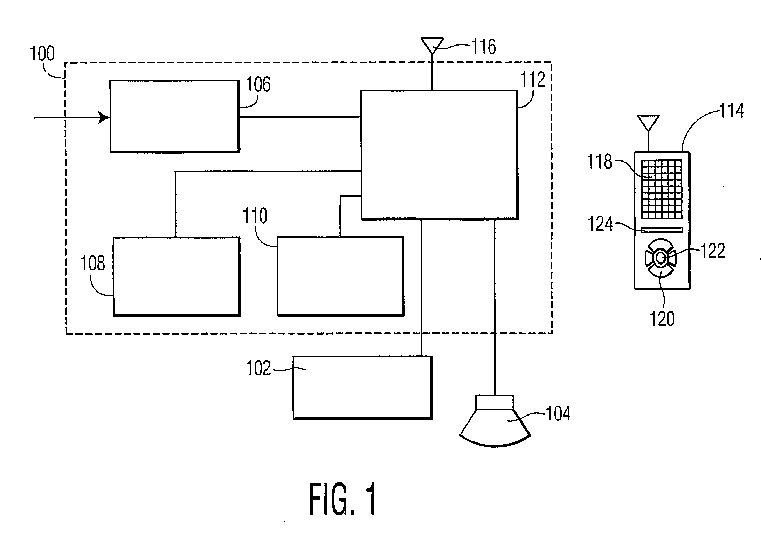

Referring now to Figure 1, there is illustrated a schematic of an embodiment of an apparatus for viewing a multi-media stream. The apparatus being generally referred to by reference numeral 100. The apparatus 100 is shown by way of example only as a set-top box having a video display 102 and speaker 104 operatively connected thereto. The apparatus can be any device that can display a multi-media stream or cause the same to be displayed, such as a cellular phone, a personal digital assistant, a web-tablet, a laptop or desktop computer, or a television monitor. Although the video display 102 and speaker 104 are shown separate from the apparatus 100, either or both can also be integral therewith.

The apparatus 100 has an input means 106 for inputting the multi-media stream. The multi-media stream can be any video or audio content and can be input by any means known in the art, such as on a storage medium such as a DV, DVD, CD, D-VCR or directly transmitted to the apparatus 100, such as by broadcast, satellite, cable, cellular, and the like. Whether the multi-media stream is input by transmission or storage medium, it may be stored in the apparatus 100 at an internal storage device (not shown), such as a hard drive typically found on a PVR. The multi-media stream is then accessed from the storage device. Thus, the input means can be means for reading and playing the storage medium or means for receiving and reading the transmitted data stream. The apparatus can also have a speech recognition system 108 for recognizing words in the audio portion of the multi-media stream and an image recognition system 110 for recognizing words in image-based subtitles in the multi-media stream. The components of the apparatus 100, as well as the display 102 and speaker 104 are preferably under the control of a processor 112 (alternatively referred to as a "controller"). The processor 112 can be dedicated to the control of the components of the apparatus 100 discussed above or can also control other functions of the apparatus 100. For example, where the apparatus 100 is a set-top box, the processor can also control other standard functions of the set-top box, such as operating a tuner for receiving and displaying television broadcast or cable channels.

The apparatus 100 also has an indication means for indicating a desire to access a dictionary database during viewing of the multi-media stream. As will be discussed below, the multi-media stream preferably has the dictionary database contained therein. The dictionary database can have information corresponding to words used in the multi-media stream, such as definitions, translations, and/or synonyms for at least some of the words used in the multi-media stream. The indication means can be a remote control device 114. The remote control device 114 can be wired to the apparatus 100 or wirelessly communicate with the apparatus 100 through a wireless medium, such as infrared of RF. In the wireless configuration, the apparatus includes an antenna 116 (receiver) operatively connected to the processor 112 for communicating with the remote control device 114 as is known in the art. The remote control 114 is preferably not dedicated to the functions of the apparatus 100 as discussed below but is also used to control other functions of the device. Where the apparatus 100 is a set-top box, the remote control 114 can also be used to change channels, control volume, and control other standard features. The remote control 114 has a plurality of buttons 118 for such functions as well as a directional button pad 120 for, among other functions, traversing a displayed listing on a user interface displayed on the video display 102. Preferably, the directional button pad 120 also has an "enter" button 122 for entering a highlighted function in the displayed listing.

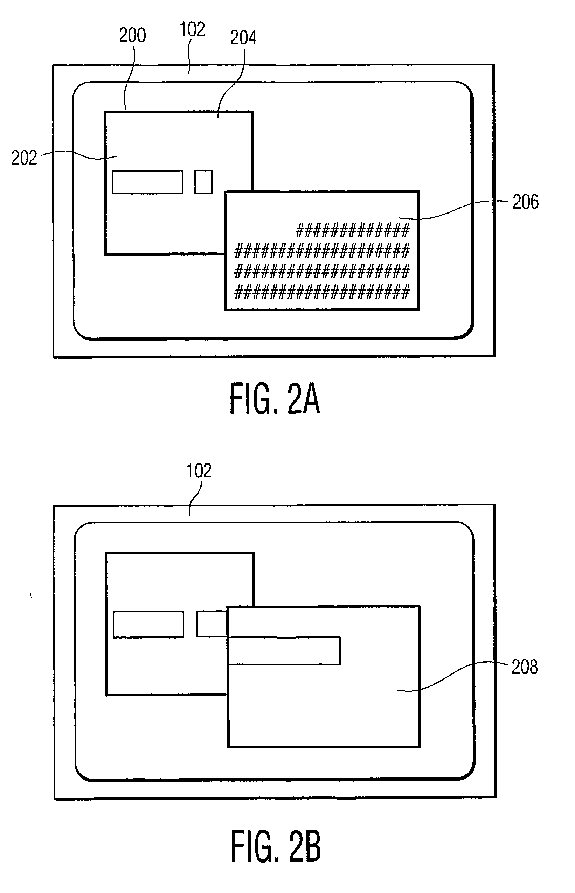

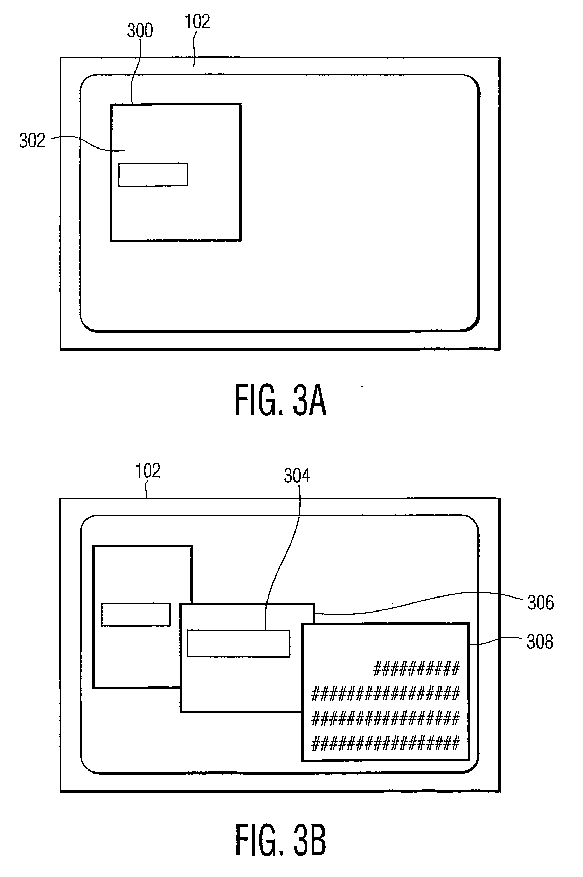

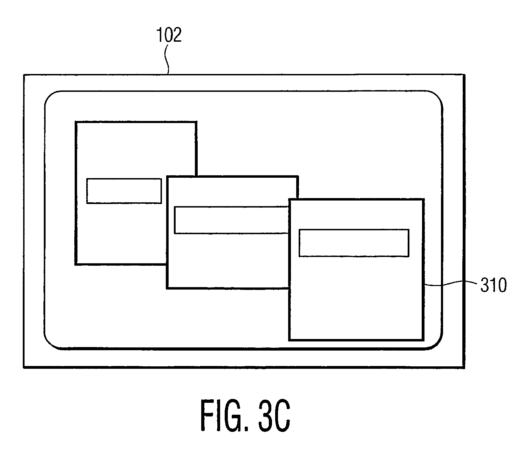

The operation of the apparatus 100 will now be described with additional reference to Figures 2A, 2B, 3A, 3B, and 3C. As discussed above, the multi-media stream preferably contains a dictionary database. The dictionary database includes additional information corresponding to words in the multi-media-stream, such as definitions, translations, and/or synonyms for one or more words used in the multi-media stream. Other types of information can also be contained in the dictionary database, such as a pictorial or video example of one or more of the words in the multi-media stream. In this manner, each particular multi-media stream can include a dictionary database of selected difficult words in the multi-media stream. Thus, it is not necessary to have a master dictionary database stored at the device having general word entries as well as technical and medical word entries for a variety of areas. The complete dictionary database can be included in the multi-media stream at least at the start of a program/event. The dictionary database can then be included repeatedly if random access to the stream is required. However, an alternative approach is to have only a very small dictionary database of a determined number of interesting words in the stream (e.g., the last 8 interesting words) that is constantly updated. When the viewer indicates a desire to access the dictionary database, the last predetermine number of words is displayed. Thus, the need for speech/subtitle recognition can be avoided.

While viewing the multi-media stream, the viewer is permitted to access the dictionary database, preferably by indicating a desire to so access the dictionary database on the remote control device 114. Preferably, the viewer presses a dedicated button 124 on the remote control (or alternatively, on the apparatus 100) to initiate access to the dictionary database is desired. The dedicated button can be labeled with a dictionary symbol, "Help" or a question mark. Upon depressing the dedicated button 124 or otherwise indicating a desire to access the dictionary database, the processor 112 accesses the dictionary database in the multi-media stream and displays a definition, translation, and/or synonym of one or more selected words in the multi-media stream on the display 102.

The selected words can be chosen based on data in the multi-media stream, displayed subtitles in the multi-media stream, and/or reproduced audio in the multi-media stream. Where the multi-media stream has text-based subtitles (e.g., closed captions, teletext-based subtitling), the processor can directly recognize and access the words in the dictionary database. For image-based subtitles that are part of the video or that are broadcast as DVB subtitles (bitmaps), the image recognition system 110 is used to recognize words in the multi-media stream. Where there are no subtitles, the speech recognition system 108 is used to recognize words in the audio portion of the multi-media stream. Both speech and image recognition systems are well known in the art and a detailed discussion thereof is omitted for the sake of brevity.

Once the words are recognized from the multi-media stream, the words can be selected based on a predetermined number of words that were spoken or displayed prior to the indicating. For example, the processor can access the dictionary database and display the last word or the last ten words reproduced on the speaker (or displayed on the subtitles) prior to the dedicated button 124 being depressed. Alternatively, the selected words can be chosen based on a predetermined time period prior to the indicating. For example, the processor can access the dictionary database and display the words reproduced on the speaker during the last ten seconds prior to the dedicated button 124 being depressed. The apparatus 100 can preferably be programmed by the viewer to choose a default method for selecting the words to be displayed as well as the predetermined number of words or length of the predetermined time period. The methods of the present invention can also filter out obvious words (such as "I," "the," and "an". Where the dictionary database is in the multi-media stream, the dictionary database can exclude such obvious words, however, the filter can be important when the dictionary database is stored in the apparatus 100.

Figures 2A and 2B illustrate a first example of a graphical user interface displayed by the apparatus 100 on the display 102. Upon depressing the dedicated button 124, the multi-media stream, e.g., a movie, can be paused, the processor 112 recognizes the words in the multi-media stream, possibly with the use of the speech and image recognition systems 108, 110, and a first window 200 is displayed over the paused movie. Alternatively, the processor 112 can recognize the words in the multi-media stream as the stream is playing and possibly cache the previous number of words according to the predetermined time period of number of words. The first window contains a listing of words 202 selected according to a predetermined criteria, examples of which are discussed above. Each word further has categories 204 corresponding to a type of information about each word. For example, each word in the listing 202 has a "D" for definition, a "T" for translation, and an "S" for synonym. If other additional information is selected, such as a video example of the word, an additional window (not shown) can be used to play the video example. The video example can be added to the categories as a "V." The viewer would then highlight the word for which he or she needs more information using the directional button pad 120. The viewer would similarly highlight one of the categories corresponding to the highlighted word using the directional button pad 120. After the viewer's choice is highlighted, he or she can depress the enter button 122 to enter his selection. Upon entering the selection, another window 206 is displayed having the definition, translation, or synonyms of the highlighted word in the listing 202. Where a translation is desired, an interim window 208 can be displayed prior to window 206 for selection of a language for the translation as is shown in Figure 2B. Alternatively, a default language can be set using the processor, thus, eliminating the need for the additional window 208, 310. After displaying the additional information for the selected word, the viewer can then select another word (e.g., using a back button on the remote control device 114) or hide/stop the dictionary database application. Where the multi-media stream has been paused, upon hiding or stopping the dictionary database application, the multi-media stream can automatically restart or manually restart upon an indication by the viewer.

Figures 3A-3C illustrate another example of a graphical interface displayed by the apparatus 100 on the display 102. Upon depressing the dedicated button 124, the multi-media stream is paused and a first window 300 is displayed over the paused movie. The first window contains a listing of words 302 selected according to a predetermined criteria, examples of which are discussed above. However, the categories 304 corresponding to a type of information about a selected word in the first window 300 is displayed in a second window 306. For example, each word in the listing 302 has a "Definition," a "Translation," and a "Synonym" choice displayed in the second window 306. The viewer first highlights the word for which he or she needs more information using the directional button pad 120 and the enter button 122. The second window 306 would then be displayed and the viewer would similarly highlight one of the categories 304 corresponding to the highlighted word again using the directional button pad 120 and enter button 122. Upon entering the selection, another window 308 is displayed (similar to window 206 in the first example) having the definition, translation, or synonyms of the highlighted word in the listing 302, as is shown in Figure 3B. Where a translation is desired, an interim window 310 would be displayed (similar to window 208 in the first example) prior to window 306 for selection of a language for the translation as is shown in Figure 3C.

Although, the selected words and corresponding characteristics are shown as being displayed on windows, those skilled in the art will appreciate that they can be displayed in other ways, such as along a bar displayed at the top of the display 102 or in a drop-down menu along one side of the screen. Furthermore, although the multi-media content can be paused while the selected words are displayed, it can also continue to play while the selected words are displayed. Furthermore, if the multi-media stream does continue to play, the display of the same can be reformatted such that it can be viewed without obstruction by the display of the selected words.

The methods of the present invention are particularly suited to be carried out by a computer software program, such computer software program preferably containing modules corresponding to the individual steps of the methods. Such software can of course be embodied in a computer-readable medium, such as an integrated chip or a peripheral device. The computer software program can also be part of the multi-media stream (as MHP or OCAP application). Therefore, the computer software program can use specific knowledge of the audio, video, content, and dictionary database in the stream.

Those skilled in the art will appreciate that the methods and apparatus of the present invention eliminates the disadvantages of the methods of the prior art. For example, in contrast to the methods of the prior art, the viewer is not required to stop the viewing of the multi-media stream and start another application. The viewer is also not required to manually type in a word that he/she does not understand. Therefore, there is no need for a full keyboard, a simple remote control with directional keys and an enter key (which is common on most consumer electronic products) is sufficient. Additionally, the methods and apparatus of the present invention are not restricted to multi-media streams having text-based subtitles, but can also be used with content having image-based subtitles or no subtitles at all. Furthermore, since the dictionary database can be contained in the multi-media stream, it can be tailored specifically to the content of the multi-media stream. This is particularly useful for multi-media streams that are used in education, documentaries, and courses that have their own vocabulary. Although, the methods and apparatus have particular utility for such types of content, it also has utility as an additional service for regular content, such as movies.

## Claims

1. A method for viewing a multi-media stream, the method comprising:
- recognizing words in the multi-media stream;
- indicating a desire to access a dictionary database during viewing of the multi-media stream;
- accessing the dictionary database upon the indicating; and
- displaying at least one of a definition, translation, and synonym of one or more selected words in the multi-media stream, **characterized in that**
the selected words are chosen based on a predetermined number of recognized words that were spoken or displayed prior to the indicating.

2. The method of claim 1, wherein the selected words are chosen based on at least one of data in the multi-media stream, displayed subtitles in the multi-media stream, and reproduced audio in the multi-media stream.

3. The method of claim 1, wherein the dictionary database is contained in the multi-media stream.

4. The method of claim 1 wherein the recognized words are not text-based subtitles.

5. The method of claim 4, wherein the recognizing comprises recognizing image-based subtitle words using image recognition.

6. The method of claim 4, wherein the recognizing comprises recognizing audio words using speech recognition.

7. The method of claim 1,further comprising choosing one of the definition, translation, and synonym for at least one of the selected words and displaying the chosen definition, translation, or synonym.

8. The method of claim 1, wherein the indicating comprises pressing a button (124) dedicated to initiating the access to the dictionary database.

9. The method of claim 1, further comprising pausing the viewing of the multi-media stream while accessing the dictionary database.

10. An apparatus (100) for viewing a multi-media stream, the apparatus comprising:
- input means (106) for inputting the multi-media stream;
- a display (102) for viewing a video portion of the multi-media stream;
- a speaker (104) for reproducing an audio portion of the multi-media stream;
- recognition means (108, 110) for recognizing words in the multi-media stream;
- means (114, 116) for indicating a desire to access a dictionary database during viewing of the multi-media stream; and
- a controller (112) for accessing the dictionary database upon the indicating and displaying at least one of a definition, translation, and synonym of one or more selected words in the multi-media stream,
**characterized in that** the controller is furthermore adapted for choosing selected words based on a predetermined number of recognized words that were spoken or displayed prior to the indicating.

11. The apparatus of claim 10, further comprising means for choosing one of the definition, translation, and synonym for at least one of the selected words and wherein the controller is adapted for displaying the chosen definition, translation, or synonym.

12. The apparatus of claim 10, wherein the recognition means (108, 110) are adapted for recognizing words in the multi-media stream that are not text-based subtitles.

13. The apparatus of claim 10, wherein the dictionary database is contained in the multimedia stream.

14. A computer program product for viewing a multi-media stream, the computer program product comprising:
- computer readable program code means for recognizing words in the multi-media stream;
- computer readable program code means for indicating a desire to access a dictionary database during viewing of the multi-media stream;
- computer readable program code means for accessing the dictionary database upon the indicating, and
- computer readable program code means for displaying at least one of a definition, translation, and synonym of one or more selected words in the multi-media stream, **characterized by**
- computer readable program code means for choosing the selected words based on a predetermined number of recognized words that were spoken or displayed prior to the indicating.

15. The computer program product of claim 14, wherein the computer program product is embodied in a computer-readable medium.

16. The computer program product of claim 14, wherein the computer program product is contained in the multi-media stream.

## Patentansprüche

1. Verfahren zum Betrachten eines Multimediastroms, wobei das Verfahren Folgendes umfasst:
- das Erkennen von Wörtern in dem Multimediastrom;
- das Angeben eines Wunsches zum Zugreifen auf eine Wörterbuchdatei beim Betrachten des Multimediastroms;
- das Zugreifen auf die Wörterbuchdatei bei der Angabe; und
- das Wiedergeben wenigstens einer Definition, einer Übersetzung, oder eines Synonyms eines oder mehrerer selektierter Wörter in dem Multimediastrom, **dadurch gekennzeichnet, dass**
- die selektierten Wörter auf Basis einer vorbestimmten Anzahl erkannter Wörter gewählt werden, die vor der Angabe ausgesprochen oder wiedergegeben wurden.

2. Verfahren nach Anspruch 1, wobei die selektierten Wörter auf Basis wenigstens eines der Daten in dem Multimediastrom, wiedergegebener Untertitel in dem Multimediastrom, und wiedergegebener Audiosignale in dem Multimediastrom gewählt werden.

3. Verfahren nach Anspruch 1, wobei die Wörterbuchdatei in dem Multimediastrom enthalten ist.

4. Verfahren nach Anspruch 1, wobei die erkannten Wörter keine textbasierte Untertitel sind.

5. Verfahren nach Anspruch 4, wobei das Erkennen das Erkennen bildbasierter Untertitelwörter unter Anwendung von Bilderkennung umfasst.

6. Verfahren nach Anspruch 4, wobei das Erkennen das Erkennen von Audiowörtern unter Anwendung von Spracherkennung umfasst.

7. Verfahren nach Anspruch 1, das weiterhin das Wählen der Definition, der Übersetzung oder eines Synonyms für wenigstens eines der selektierten Wörter und das Wiedergeben der gewählten Definition, Übersetzung oder des Synonyms umfasst.

8. Verfahren nach Anspruch 1, wobei die Angabe das Betätigen einer Taste (124), vorgesehen zum Auslösen des Zugriffs auf die Wörterbuchdatei, umfasst.

9. Verfahren nach Anspruch 1, wobei dieses Verfahren weiterhin das Pausieren der Betrachtung des Multimediastroms beim Zugreifen auf die Wörterbuchdatei umfasst.

10. Anordnung (100) zum Betrachten eines Multimediastroms, wobei die Anordnung Folgendes umfasst:
- Eingabemittel (106) zum Eingeben des Multimediastroms,
- eine Wiedergabeanordnung (102) zum Betrachten eines Videoteils des Multimediastroms,
- einen Lautsprecher (104) zum Wiedergeben eines Audioteils des Multimediastroms,
- Erkennungsmittel (108, 110) zum Erkennen von Wörtern in dem Multimediastrom,
- Mittel (114, 116) zum Angeben eines Wunsches zum Zugreifen auf eine Wörterbuchdatei beim Betrachten des Multimediastroms, und
- einen Controller (112) zum Zugreifen auf die Wörterbuchdatei beim Angeben und Wiedergeben wenigstens einer Definition, einer Übersetzung oder eines Synonyms eines oder mehrerer selektierter Wörter in dem Multimediastrom,
**dadurch gekennzeichnet, dass** der Controller weiterhin dazu vorgesehen ist, selektierte Wörter zu wählen, und zwar auf Basis einer vorbestimmten Anzahl erkannter Wörter, die vor der Angabe ausgesprochen oder wiedergegeben wurden.

11. Anordnung nach Anspruch 10, weiterhin mit Mitteln zum Wählen der Definition, der Übersetzung oder des Synonyms für wenigstens eines der selektierten Wörter und wobei der Controller dazu vorgesehen ist, die gewählte Definition, Übersetzung oder das gewählte Synonym wiederzugeben.

12. Anordnung nach Anspruch 10, wobei die Erkennungsmittel (108, 110) dazu vorgesehen sind, Wörter in dem Multimediastrom zu erkennen, die keine textbasierte Untertitel sind.

13. Anordnung nach Anspruch 10, wobei die Wörterbuchdatei in dem Multimediastrom enthalten ist.

14. Computerprogrammprodukt zum Betrachten eines Multimediastroms, wobei das Computerprogrammprodukt Folgendes umfasst:
- vom Computer auslesbare Programmcodemittel zum Erkennen von Wörtern in dem Multimediastrom,
- vom Computer auslesbare Programmcodemittel zum Angeben eines Wunsches zum Zugreifen auf eine Wörterbuchdatei beim Betrachten des Multimediastroms,
- vom Computer auslesbare Programmcodemittel zum Zugreifen auf die Wörterbuchdatei beim Angeben, und
- vom Computer auslesbare Programmcodemittel zum Wiedergeben wenigstens einer Definition, einer Übersetzung oder eines Synonyms eines oder mehrerer selektierter Wörter in dem Multimediastrom, **gekennzeichnet durch**
- vom Computer auslesbare Programmcodemittel zum Wählen der selektierten Wörter auf Basis einer vorbestimmter Anzahl erkannter Wörter, die vor der Angabe ausgesprochen oder wiedergegeben wurden.

15. Computerprogrammprodukt nach Anspruch 14, wobei das Computerprogrammprodukt in ein vom Computer auslesbares Medium einverleibt ist.

16. Computerprogrammprodukt nach Anspruch 14, wobei das Computerprogrammprodukt in dem Multimediastrom enthalten ist.

## Revendications

1. Procédé de consultation d'un flux multimédia, le procédé comprenant les étapes suivantes :
- la reconnaissance de mots dans le flux multimédia ;
- l'indication d'un souhait d'accéder à une base de données de dictionnaires pendant la consultation du flux multimédia ;
- l'accès à la base de données de dictionnaires lors de l'indication du souhait, et
- l'affichage d'une définition, d'une traduction et/ou d'un synonyme d'un ou de plusieurs mots sélectionnés dans le flux multimédia, **caractérisé en ce que**
les mots sélectionnés sont choisis sur la base d'un nombre prédéterminé de mots reconnus qui ont été prononcés ou affichés avant l'indication du souhait.

2. Procédé suivant la revendication 1, dans lequel les mots sélectionnés sont choisis sur la base de données contenues dans le flux multimédia, de sous-titres affichés dans le flux multimédia et/ou de données audio reproduites dans le flux multimédia.

3. Procédé suivant la revendication 1, dans lequel la base de données de dictionnaires est contenue dans le flux multimédia.

4. Procédé suivant la revendication 1, dans lequel les mots reconnus ne sont pas des sous-titres textuels.

5. Procédé suivant la revendication 4, dans lequel la reconnaissance comprend la reconnaissance de mots présents dans des sous-titres basés sur des images en utilisant la reconnaissance d'image.

6. Procédé suivant la revendication 4, dans lequel la reconnaissance comprend la reconnaissance de mots audio en utilisant la reconnaissance vocale.

7. Procédé suivant la revendication 1, comprenant en outre le choix de la définition, de la traduction ou du synonyme pour au moins un des mots sélectionnés et l'affichage de la définition, de la traduction ou du synonyme choisi.

8. Procédé suivant la revendication 1, dans lequel l'indication du souhait comprend une pression sur un bouton (124) dévolu à lancer l'accès à la base de données de dictionnaires.

9. Procédé suivant la revendication 1, comprenant en outre l'arrêt momentané de la consultation du flux multimédia pendant l'accès à la base de données de dictionnaires.

10. Appareil (100) pour consulter un flux multimédia, l'appareil comprenant :
- des moyens d'entrée (106) pour fournir en entrée le flux multimédia ;
- un afficheur (102) pour voir une partie vidéo du flux multimédia ;
- un haut-parleur (104) pour reproduire une partie audio du flux multimédia ;
- des moyens de reconnaissance (108, 110) pour reconnaître des mots dans le flux multimédia ;
- des moyens (114, 116) pour indiquer un souhait d'accéder à une base de données de dictionnaires pendant la consultation du flux multimédia, et
- un dispositif de commande (112) pour accéder à la base de données de dictionnaires lors de l'indication du souhait et afficher une définition, une traduction et/ou un synonyme d'un ou de plusieurs mots sélectionnés dans le flux multimédia ;
**caractérisé en ce que** le dispositif de commande est en outre à même de choisir des mots sélectionnés sur la base d'un nombre prédéterminé de mots reconnus qui ont été prononcés ou affichés avant l'indication du souhait.

11. Appareil suivant la revendication 10, comprenant en outre des moyens pour choisir la définition, la traduction ou le synonyme pour au moins un des mots sélectionnés et dans lequel le dispositif de commande est à même d'afficher la définition, la traduction ou le synonyme choisi.

12. Appareil suivant la revendication 10, dans lequel les moyens de reconnaissance (108, 110) sont à même de reconnaître des mots dans le flux multimédia qui ne sont pas des sous-titres textuels.

13. Appareil suivant la revendication 10, dans lequel la base de données de dictionnaires est contenue dans le flux multimédia.

14. Produit formant programme informatique pour consulter un flux multimédia, le produit formant programme informatique comprenant :
- des moyens formant code de programme lisible par ordinateur pour reconnaître des mots dans le flux multimédia ;
- des moyens formant code de programme lisible par ordinateur pour indiquer un souhait d'accéder à une base de données de dictionnaires pendant la consultation du flux multimédia ;
- des moyens formant code de programme lisible par ordinateur pour accéder à la base de données de dictionnaires lors de l'indication du souhait, et
- des moyens formant code de programme lisible par ordinateur pour afficher une définition, une traduction et/ou un synonyme d'un ou de plusieurs mots sélectionnés dans le flux multimédia, **caractérisés par**
- des moyens formant code de programme lisible par ordinateur pour choisir les mots sélectionnés sur la base d'un nombre prédéterminé de mots reconnus qui ont été prononcés ou affichés avant l'indication du souhait.

15. Produit formant programme informatique suivant la revendication 14, dans lequel le produit formant programme informatique est réalisé en un support lisible par ordinateur.

16. Produit formant programme informatique suivant la revendication 14, dans lequel le produit formant programme informatique est contenu dans le flux multimédia.
